# EUROPEAN PATENT SPECIFICATION

(11) **EP 1 295 912 B1**
(45) Date of publication and mention of the grant of the patent: **04.05.2005**
(21) Application number: 01308062.7
(22) Date of filing: 21.09.2001
(51) Int. Cl.: C08L 95/00, E01C 7/26, E01C 19/23

(54) **An asphalt additive, a composition added with the asphalt additive, and a method for preparation of the composition and its application**
Asphaltzusatz, Zusammensetzung mit diesem Zusatz sowie Verfahren zur Herstellung und Anwendung der Zusammensetzung
Additif pour asphalte, composition le contenant et procédé de préparation et d'utilisation de la composition

(43) Date of publication of application: 26.03.2003
(73) Proprietor: Kim, Hion-Joon, Becheon-city, Kyunggi-do (KR)
(72) Inventor: Kim, Hion-Joon, Becheon-city, Kyunggi-do (KR)
(74) Representative: Franks, Robert Benjamin

(56) References cited:
- GB-A- 2 265 173
- US-A- 5 436 285
- US-A- 5 501 730
- US-A- 5 558 704

## Description

### Field of the Invention

The present invention relates to a preparation of asphalt and its application as a paving material, more specifically, to an asphalt additive and its application.

### Description of the related Art

Recent tendency for road focusing on the convenience, high-quality, durability, and environmental friendliness rather than its former emphasis on mere transport function of materials and personnel has been increased, leading to higher demand for replacement of the conventional road.

The conventional asphalt mixture widely used for road pavement is a mixture for hot mixing and hot application of asphalt as specified in KSF 2349. This mixture is produced by a mechanical forced mixing facility (asphalt mixing plant) through mixture of smashed rocks, sand, and mineral powder at 150∼170°C according to mixing requirement, which is delivered to the construction site by means of various transportation vehicles, such as dump truck. The mixture is paved *in situ* at above 125°C by the finisher, roller, or other suitable means, which is then finished according to the specified level of construction requirements depending on vehicle loads.

AP-3 (complying with asphalt specification) is mainly used in Korea as a binding agent, which should meet the following specification in accordance with KSM 2201 (Specification of Asphalt for Pavement).

| Items | Conditions | Limits |
|---|---|---|
| Penetration degree | 25°C,100g, 5sec | 85∼100 |
| Ignition temperature | COC, °C | NLT 230 |
| Ductility | (25°C , 5cm/min)cm | NLT 100 |
| Penetration degree after heating of thin film (Against the basic penetration degree) | % | NLT 47 |
| Ductility after heating of thin film | (25°C, 5cm/min)cm | NLT 75 |
| Soluble trichloroethane | % | NLT 99 |
| * NLT: Not less than | | |

However, one of major problems observed in the conventional asphalt mixture is that paving cannot be conducted when the temperature is below zero. Indeed, the guidelines on road pavement provided by the Ministry of Construction and Transportation require that pavement should not be done below 5°C. Further, in summer, various problems, such as the rutting of road surface, irregular corrugation along the longitudinal section, labelling arising from plastic deformation, bleeding of asphalt fluid due to increase of road load, repetitively occur, leading to decrease of durability owing to the resultant crevices, holes, and ablation. So, re-pavement or repair of road is repetitively required every four to five years, which greatly contributes to increase of budget for maintenance of road, compared to that for new construction of roads.

Moreover, in the conventional road, a sound-absorbing wall has been used to block the noise from traffic. If it does not work for sufficient reduction of noise, another window for prevention of noise is additionally installed. Such installation of the sound-absorbing wall or window is very expensive. When they are not effective in blocking of noise, there has been no choice but control the traffic speed.

UK patent application No: GB 2265173 discloses an improved asphalt additive comprising rubber chips made from shredded rubber tires with a particle size of up to 20mm and a petroleum resin with a softening point of 95 to 105°C. This application is directed to the provision of speed control that has an increased resistance to wear.

A further reference disclosing an asphalt composition is US patent no: 5436285. However, the compositions disclosed in US 5436285 and GB 2265173 may suffer from one or more of the aforementioned problems.

### Summary of the Invention

The purpose of this invention is to provide an asphalt additive used for mixing of asphalt and paving materials, which is expected to reduce the noise from traffic, prevent any plastic deformation of road in summer, and minimize crack from contraction in winter.

Another purpose of this invention is to provide an asphalt composition containing the asphalt additive.

The third purpose of this invention is to provide a method for preparation of the asphalt composition and its application.

### DESCRIPTION OF THE PREFERRED EMBODIMENT

An asphalt additive of this invention comprises a tire rubber powder and a petroleum resin, wherein the tire rubber powder has a particle size of about 30∼40 mesh and the petroleum resin is a thermoplastic resin with a softening point of 95∼160°C and specific gravity of 1.05∼ 1.1.

An asphalt composition of this invention comprises 2.5∼7.5 wt. % of an asphalt additive and can be prepared by mixing 5∼10 wt. % of a straight asphalt, 2∼7 wt. % of the tire rubber powder, 3∼8 wt. % of the petroleum resin, and a balance of an aggregate for asphalt pavement.

The straight asphalt has a penetration degree of 43∼ 72mm, a softening point of above 47°C, and ductility of above 50cm.

The above aggregate can be a composition of particles with different particle sizes. When maximum particle size of the aggregate is 13 mm, the particle distribution based on passage of mesh can be as follows; 92∼100% of 13mm, 62∼81% of 9.5mm, 10∼31% of 4.75mm, 10∼21% of 2.36mm, 4∼17% of 0.6mm, 3∼12% of 0.3mm, 3∼8% of 0.15mm, and 2∼7% of 0.75mm. When maximum particle size of the aggregate is 19mm, the particle distribution based on passage of mesh can be as follows; 95∼100% of 19mm, 53∼78% of 13mm, 35∼62% of 9.5mm, 10∼31% of 4.75mm, 10∼21% of 2.36mm, 4∼17% of 0.6mm, 3∼12% of 0.3mm, 3∼8% of 0.15mm, and 2∼7% of 0.75mm.

The aggregate is mainly the hard one with particle size of 19mm∼2.36mm and makes up for 80 to 90% of total weight. Further, since big aggregates meet the quality requirement as specified in KSF 2357 (Specification of Asphalt for Pavement), the porosity required for paved road can be realized.

Detailed particle distribution is summarized in Table 1.

**Table 1.**

| Particle Distribution of Asphalt composition of this Invention | | |
|---|---|---|
| Passage Rate(%) | | |
| Particle Diameter (mm) | Max. Diameter 13 mm(%) | Max. Diameter 19 mm(%) |
| 19 | 100 | 95∼100 |
| 13.2 | 92∼100 | 53∼78 |
| 9.5 | 62∼81 | 35∼62 |
| 4.75 | 10∼31 | 10∼31 |
| 2.36 | 10∼21 | 10∼21 |
| 0.6 | 4∼17 | 4∼17 |
| 0.3 | 3∼12 | 3∼12 |
| 0.15 | 3∼8 | 3∼8 |
| 0.75 | 2∼7 | 2∼7 |
| Asphalt Content | 4.5∼5.5% | |

In order to use the aggregate with flatness of below 1/3 and higher abrasion coefficient, the hard-steel slug aggregate with surface abrasion rate of below 2.8 and hardness of above 3 is preferentially used, which results in desirable skid-proof effects and stability even under strong shock. Further, the porosity of the composition reaches 15 to 25%.

The asphalt additive and asphalt composition of this invention can reduce the noise from traffic due to its unique properties, such as sound-absorbing, porosity, and particle size of aggregate, which can be further explained as below.

### (1) Air pumping of tire

When tire comes to contact the road surface, the air gap in the road surface removes the compression and expansion of air present between tire and road, leading to decrease of noise through air pumping and air resonance.

### (2) Sound absorption

The air gap in the road plays an important role of absorbing sound generated by a space between grooves of tire and road surface, leading to reduction of reflection and spread of noise (acoustic absorber). This property can contribute to absorption of other surrounding noise, in addition to the noise from tire and road.

In order to improve the durability, stability, and binding strength of the asphalt composition, the binding agent of this invention is prepared by mixing a straight asphalt, a rubber powder from wasted tire, and a petroleum resin rather than using the conventional AS-P asphalt. Use of wasted tire has various effects, including low cost and easy procurement. Appropriate mixing of the rubber powder from waster tire and petroleum resin results in desirable binding agent satisfying the relevant requirements, which is the very reformed asphalt.

This asphalt binding agent is a mixture with appropriate porosity satisfying the Marshall's stability level of more than 500kg at the following conditions.

| | |
|---|---|
| Penetration degree | 43∼72 |
| Softening point | NLT 70 |
| Ductility | NLT 50 |
| Toughness (kgf.cm) | NLT 100 |
| Tenacity (kgf.cm) | NLT 100 |
| Viscosity at 140°C (Pas) (poise) | NLT 80 (800) |

This binding agent and aggregate with specified particle size have the properties of being better coated at higher temperature by 15∼25°C than the temperature for mixing of the conventional asphalt concrete and being easily bound due to melting of thermoplastic petroleum resin preventing movement through reinforcement of binding strength. Its specific gravity is 1.05-1.1 (ASTM D 71∼72a) and the softening point is 95∼160°C (ASTM E28 ∼58).

Also, the asphalt composition added with 2∼7 wt. % of the rubber powder made by reducing the wasted tire through cold-freezing treatment to powder of below 30∼40 mesh showed desirable effect of preventing cracks arising from contraction at the temperature of below zero.

Further, since the tire rubber is originally made to contain the UV blocking agent, anti-flowing agent, carbon, etc. and UV-induced-oxidation resistance material and aging resistance material are included to prevent decrease of binding strength and endure the contraction in winter, main problems observed in the conventional asphalt pavement, such as labelling arising from plastic deformation in summer, breeding owing to heavy load, and crack of road, can be avoided. Moreover, contraction of paving material itself can contribute to prevention of decrease of road life span resulting from crevice, crack, or holes.

The asphalt composition of this invention is prepared by mixing 5∼10 wt. % of straight asphalt, 2∼7 wt. % of rubber powder, 3∼8 wt. % of petroleum resin, and aggregate for asphalt pavement at 175∼195°C. At first, the asphalt, rubber powder from wasted tire, and petroleum resin are mixed to make the reformed asphalt and then, aggregate is added at high temperature. Or, it can be directly prepared through hot mixing of the straight asphalt, asphalt additive, and aggregate.

Also, this invention provides the application of this asphalt composition to low-noise asphalt pavement by applying the previously prepared low-noise asphalt composition over road while maintaining the temperature of above 150°C.

The technology of applying the asphalt composition of this invention, considered as the highest-quality pavement technology, is an improved one from the conventional one for paving of asphalt concrete. The application of the asphalt composition of this invention to the asphalt pavement comprises the following processes.
1. 5∼10 wt. % of straight asphalt, 2∼7 wt. % of tire rubber powder, 3∼8 wt. % of petroleum resin, and aggregate for asphalt pavement are mixed at 175∼195°C using an asphalt mixing plant.
2. The asphalt composition prepared in the above process is delivered to the construction site by a 15-ton truck at the speed of 40km/h (because of porous structure). To maintain the temperature during delivery, appropriate insulation measure, such as covering, has to be taken.
3. The delivered asphalt composition is paved over water-repellent material at above 150°C (preferentially, above 165°C). The asphalt composition is paved to accomplish the appropriate thickness, preferentially 5cm, over 1.5cm of the underlying layer preventing penetration of water (water-repellent material). The water-repellent material is a composition prepared by mixing 80∼84% of asphalt material with penetration degree of 35∼50 and 16∼20% of polypropylene polymer, thermoplastic resin, portland resin, and asphaltene at above 180°C. The relevant technologies were already disclosed in Korea (Patent application no. 98-1205 and 98-5192) and they are fully referenced in this description.
4. With use of a vibrating tire roller, the paved road is continuously hardened three times. If too heavy roller is used at the first hardening, appropriate hardening cannot be achieved and materials can be pushed toward a specific direction, compromising the flatness. So, the first hardening work should be carefully conducted at above 165°C within short time limit and without vibration. The second hardening should be done at above 110°C with use of a vibrating roller and the third hardening should be rapidly conducted at above 60°C with use of a non-vibrating rubber tire.

Since the asphalt composition of this invention has the porous property, the pavement with use of it is a water penetration asphalt pavement or a penetration pavement.

In the conventional water penetration asphalt pavement, rainwater is penetrated into the porous asphalt layer, aggregate layer, sand layer, and then soil. Such pavement is mainly used for square, bicycle road, or footway. In this case, AS-P, the existing asphalt material, with properties of 85∼100 of penetration degree, 230°C of ignition temperature, 45°C of softening point, above 100 of ductility at 25°C, is used as a binding agent.

Although the outer layer of road paved with the asphalt composition of this invention has the porous structure like the conventional water penetration asphalt pavement, its particle composition is completely different. Also, the binding agent used has higher ignition temperature and better elasticity at cold temperature than the conventional AS-P. It has the structure of allowing rainwater to penetrate into the outer layer, to be collected around the lower water-repellent layer, and then to be drained through downward gradient or drainage system. In this system, the asphalt concrete for the water-repellent layer was already disclosed through the present inventor's patent application no. 98-1205 and 98-5192. Accordingly, the road paved with the asphalt composition of this invention can prevent skid, water curtain, and splash phenomena frequently observed when raining. Further, this invention can contribute to protection of water resource.

The asphalt composition of this invention can be applied to pavement of airport, factory, highway, and other roads. It can efficiently increase the break friction, reduce the traffic noise, and lengthen the life span of pavement to more than 10 years.

The present invention is further illustrated by the following examples which should not be taken to limit the scope of this invention.

### Example 1: Wheel Tracking Test

The road paved with the asphalt composition of this invention has the underlying water-repellent layer. Prior to road driving test, the wheel tracking test was conducted to check the dynamic change rate and abrasion resistance of the upper surface structure by a road institute under the Korea Highway Corporation.

The test results can be summarized as follow:

| | | Conventional Asphalt concrete | Low-noise pavement |
|---|---|---|---|
| Stiffness | Dynamic change rate | 11.8∼16 | 0.014∼0.0064 |
| | Marshall's strength | 500 | 1513∼1869 |
| Abrasion | Wheel tracking index | 600∼800 | 2870∼6650 |
| Softening Point | | 40∼50 | 75∼80 |
| Strain | | 1 | 25∼100 |

According to the above results, problems found in the porous composition structure were corrected and then, another test was conducted. In this second test, more satisfactory results were obtained by 25 times, when compared to the conventional mixture.

### Example 2: Absorption of noise at driving test

Traffic noise is expressed as db, which is determined by various factors, including daily traffic amount (traffic amount/day), velocity, traffic types, road inclination, pavement condition, and type of pavement material. In general, the noise level from traffic is in the range of 74∼84 db.

During driving test, the noise level was measured at 1m away from road using an emission noise measuring equipment at the low-noise paved road and the conventional road by allowing vehicles to drive at 60km/hour.

This measurement was conducted at a quiet mountain road in northern Gyeonggi province. The temperature was 27°C and the humidity was about 70%. A driver ran a compact car at constant velocity.

The noise level was 70∼75db in the case of the conventionally paved road, while it was 60∼62db in the case of the road paved with the asphalt composition of this invention, showing the decrease of noise level by about 10 to 15%. When this is expressed as change of frequency, about 40% of acoustic absorption effect is resulted.

This result indicates that the road paved with the asphalt composition of this invention can reduce the noise level by more than 2 times, when compare to the reduction result of only 3 to 5db shown by the sound-absorbing wall installed in residence area, school, or hospital near the road. Further, such sound-absorbing wall can convert the traffic noise into another reverberated noise amplified, but the low-noise pavement was found to cause disappearance of the noise.

Moreover, to install such sound-absorbing wall with length of 3.5m and width of 1m, the cost is about 800,000 won in Korean currency as of 1998, so installation of such wall at both sides of a road for 100m will require 16,000,000 won. However, the low-noise pavement of this invention costs only 30,000 won per 1m², meaning economical efficiency.

As described above, this invention will have effects of providing the best service to road users, reducing traffic noise, preventing traffic accident arising from skid, water curtain, and splash phenomena, protecting water resource through effective drain function, and accomplishing excellent sound-absorbing and economical efficiency.

## Claims

1. A low-noise asphalt composition comprising an asphalt additive that includes a tire rubber powder and a petroleum resin, said asphalt composition **characterised in that** it comprises:
(a) 5-10 wt. %, based on the total weight of the composition, of a straight asphalt;
(b) an asphalt additive including:
(b1) 2-7 wt. %, based on the total weight of the composition, of said tire rubber powder, and
(b2) 3-8 wt. %, based on the total weight of the composition, of said petroleum resin; and
(c) a balance of an aggregate suitable for asphalt paving material;
and the straight asphalt has a penetration degree of 43 to 72 mm, a softening point of more than 47°C, and a ductility of above 50 cm.

2. A low-noise asphalt composition according to claim 1, wherein the aggregate has a maximum 13mm particle size and, based on passage through a mesh, its particle distribution is 92 to 100% of 13mm, 62 to 81% of 9.5mm, 10 to 31% of 4.75mm, 10 to 21% of 2.36mm, 4 to 17% of 0.6mm, 3 to 12% of 0.3mm, 3 to 8% of 0.15mm, and 2 to 7% of 0.75mm.

3. A low-noise asphalt composition according to claim 1, wherein the aggregate has a maximum 19mm particle size and, based on passage through a mesh, its particle distribution is 95 to 100% of 19mm, 53 to 78% of 13mm, 35 to 62% of 9.5mm, 10 to 31% of 4.75mm, 10 to 21% of 2.36mm, 4 to 17% of 0.6mm, 3 to 12% of 0.3mm, 3 to 8% of 0.15mm, and 2 to 7% of 0.75mm.

4. A low-noise asphalt composition according to claim 2 or claim 3, wherein the particles having the average particle diameter of about 4.75mm comprise 5 to 10 wt.% of a hard steel slug with surface abrasion of below 2.8 and hardness of above 3.

5. A method for preparation of a low-noise asphalt composition, said composition comprising an asphalt additive that includes a tire rubber powder and a petroleum resin, said method **characterised by** comprising the step of:
mixing, at 175°C to 195°C:
(a) 5 to 10 wt.%, based on the total weight of the composition, of a straight asphalt;
(b1) 2 to 7 wt.%, based on the total weight of the composition, of the tire rubber powder,
(b2) 3 to 8%, based on the total weight of the composition, of the petroleum resin; and
(c) a balance of an aggregate suitable for asphalt paving material,
the straight asphalt having a penetration degree of 43 to 72mm, a softening point of more than 47°C, and a ductility of above 50cm.

6. A method for preparation of the low-noise asphalt composition according to claim 5, wherein the mixing comprises mixing the straight asphalt, the tire rubber powder, and the petroleum resin to form a reformed asphalt, and mixing the reformed asphalt and the aggregate.

7. A method for preparation of the low-noise asphalt composition according to claim 5, wherein the tire rubber powder has a particle size of 30 to 40 mesh.

8. A method fore preparation of the low-noise asphalt composition according to claim 5, wherein the petroleum resin is a thermoplastic powder resin with a softening point of 95 to 160°C and specific gravity of 1.05 to 1.1.

9. A method for preparation of the low-noise asphalt composition according to claim 5, wherein the aggregate has maximum 13mm particle size and, based on passage of mesh, its particle distribution is 92 to 100% of 13mm, 62 to 81% of 9.5mm, 10 to 31% of 4.75mm, 10 to 21% of 2.36mm, 4 to 17% of 0.6mm, 3 to 12% of 0.3mm, 3 to 8% of 0.15mm and 2 to 7% of 0.75mm.

10. A method for preparing of the low-noise asphalt composition according to claim 5, wherein the aggregate has maximum 19mm particle size and, based on passage of mesh, its particle distribution is 95 to 100% of 19mm, 53 to 78% of 13mm, 35 to 62% of 9.5mm, 10 to 31% of 4.75mm, 10 to 21% of 2.36mm, 4 to 17% of 0.6mm, 3 to 12% of 0.3mm, 3 to 8% of 0.15mm and 2 to 7% of 0.75mm.

11. A method for paving a road comprising:
applying a low-noise asphalt composition over a water-repellent material of the road while maintaining the temperature of the composition above 150°C, said method **characterised in that** the composition comprises:
(a) 5-10 wt. %, based on the total weight of the composition, of a straight asphalt;
(b) an asphalt additive including:
(b1) 2-7 wt. %, based on the total weight of the composition, of a tire rubber powder, and
(b2) 3-8 wt. %, based on the total weight of the composition, of a petroleum resin; and
(c) a balance of an aggregate suitable for asphalt paving material;
and the straight asphalt has a penetration degree of 43 to 72 mm, a softening point of more than 47°C, and a ductility of above 50 cm.

12. The method according to claim 11 further comprising hardening the road.

13. The method according to claim 12, wherein the hardening comprises a first hardening at above 165°C without causing vibration, a second hardening at above 110°C with use of a vibrating roller, and a third hardening at above 60°C with use of a non-vibrating rubber tire.

## Patentansprüche

1. Geräuscharme Asphaltzusammensetzung, einen Asphaltzusatz umfassend, der ein Reifengummipulver und ein Erdölharz enthält, wobei die Asphaltzusammensetzung **dadurch gekennzeichnet ist, dass** sie folgendes umfasst:
(a) 5-10 Gew. %, basierend auf dem Gesamtgewicht der Zusammensetzung, eines unvermischten Asphalts;
(b) einen Asphaltzusatz, der folgendes enthält:
(b1) 2-7 Gew. %, basierend auf dem Gesamtgewicht der Zusammensetzung, des Reifengummipulvers, und
(b2) 3-8 Gew. %, basierend auf dem Gesamtgewicht der Zusammensetzung, des Erdölharzes; und
(c) einen Restanteil eines für ein Asphaltbelagsmaterial geeigneten Aggregats;
und dass der unvermischte Asphalt einen Penetrationsgrad von 43 bis 72 mm, einen Erweichungspunkt von mehr als 47 °C und eine Duktilität von über 50 cm aufweist.

2. Geräuscharme Asphaltzusammensetzung nach Anspruch 1, wobei das Aggregat eine Korngröße von maximal 13 mm aufweist und seine Komgrößenverteilung, basierend auf dem Durchgang durch ein Sieb, 92 bis 100% 13 mm, 62 bis 81% 9,5 mm, 10 bis 31% 4,75 mm, 10 bis 21% 2,36 mm, 4 bis 17% 0,6 mm, 3 bis 12% 0,3 mm, 3 bis 8% 0,15 mm, und 2 bis 7% 0,75 mm ist.

3. Geräuscharme Asphaltzusammensetzung nach Anspruch 1, wobei das Aggregat eine Korngröße von maximal 19 mm aufweist und seine Komgrößenverteilung, basierend auf dem Durchgang durch ein Sieb, 95 bis 100% 19 mm, 53 bis 78% 13 mm, 35 bis 62% 9,5 mm, 10 bis 31% 4,75 mm, 10 bis 21% 2,36 mm, 4 bis 17% 0,6 mm, 3 bis 12% 0,3 mm, 3 bis 8% 0,15 mm und 2 bis 7% 0,75 mm ist.

4. Geräuscharme Asphaltzusammensetzung nach Anspruch 2 oder Anspruch 3, wobei die Kömer mit durchschnittlichem Komdurchmesser von ungefähr 4,75 mm 5 bis 10 Gew. % einer harten Stahlschlacke mit einem Oberflächenabrieb von unter 2,8 und einer Härte von über 3 umfassen.

5. Verfahren zur Herstellung einer geräuscharmen Asphaltzusammensetzung, wobei die Zusammensetzung einen Asphaltzusatz umfasst, der ein Reifengummipulver und ein Erdölharz enthält, wobei das Verfahren **dadurch gekennzeichnet ist, dass** es folgende Schritte umfasst:
Mischen bei 175 °C bis 195 °C von:
(a) 5 bis 10 Gew. %, basierend auf dem Gesamtgewicht der Zusammensetzung, eines unvermischten Asphalts:
(b1) 2 bis 7 Gew. %, basierend auf dem Gesamtgewicht der Zusammensetzung, des Reifengummipulvers,
(b2) 3 bis 8 Gew. %, basierend auf dem Gesamtgewicht der Zusammensetzung, des Erdölharzes; und
(c) einem Restanteil eines für Asphaltbelagsmaterial geeigneten Aggregats,
wobei der unvermischte Asphalt einen Penetrationsgrad von 43 bis 72 mm, einen Erweichungspunkt von mehr als 47 °C, und eine Duktilität von über 50 cm aufweist.

6. Verfahren zur Herstellung der geräuscharmen Asphaltzusammensetzung nach Anspruch 5, wobei das Mischen das Mischen des unvermischten Asphalts, des Reifengummipulvers und des Erdölharzes zum Bilden eines aufbereiteten Asphalts und das Mischen des aufbereiteten Asphalts und des Aggregats umfasst.

7. Verfahren zur Herstellung der geräuscharmen Asphaltzusammensetzung nach Anspruch 5, wobei das Reifengummipulver eine Partikelgröße von Maschenweite 30 bis 40 aufweist.

8. Verfahren zur Herstellung der geräuscharmen Asphaltzusammensetzung nach Anspruch 5, wobei es sich beim Erdölharz um ein thermoplastisches Pulverharz mit einem Erweichungspunkt von 95 bis 160 °C und einem spezifischen Gewicht von 1,05 bis 1,1 handelt.

9. Verfahren zur Herstellung der geräuscharmen Asphaltzusammensetzung nach Anspruch 5, wobei das Aggregat eine Korngröße von maximal 13 mm aufweist und seine Komgrößenverteilung, basierend auf dem Durchgang durch ein Sieb, 92 bis 100% 13 mm, 62 bis 81% 9,5 mm, 10 bis 31% 4,75 mm, 10 bis 21% 2,36 mm, 4 bis 17% 0,6 mm, 3 bis 12% 0,3 mm, 3 bis 8% 0,15 mm und 2 bis 7% 0,75 mm ist.

10. Verfahren zur Herstellung der geräuscharmen Asphaltzusammensetzung nach Anspruch 5, wobei das Aggregat eine Korngröße von maximal 19 mm aufweist und seine Korngrößenverteilung, basierend auf dem Durchgang durch ein Sieb, 95 bis 100% 19 mm, 53 bis 78% 13 mm, 35 bis 62% 9,5mm, 10 bis 31% 4,75 mm, 10 bis 21% 2,36 mm, 4 bis 17% 0,6 mm, 3 bis 12% 0,3 mm, 3 bis 8% 0,15 mm und 2 bis 7% 0,75 mm ist.

11. Verfahren zum Pflastern einer Straße, das folgendes umfasst:
Auftragen einer geräuscharmen Asphaltzusammensetzung auf ein wasserabweisendes Material der Straße, wobei die Temperatur der Zusammensetzung auf über 150 °C gehalten wird, wobei das Verfahren **dadurch gekennzeichnet ist, dass** die Zusammensetzung folgendes umfasst:
(a) 5-10 Gew. %, basierend auf dem Gesamtgewicht der Zusammensetzung, eines unvermischten Asphalts;
(b) einen Asphaltzusatz, der folgendes enthält:
(b1) 2-7 Gew. %, basierend auf dem Gesamtgewicht der Zusammensetzung, eines Reifengummipulvers, und
(b2) 3-8 Gew. %, basierend auf dem Gesamtgewicht der Zusammensetzung, eines Erdölharzes; und
(c) einen Restanteil eines für ein Asphaltbelagsmaterial geeigneten Aggregats;
und wobei der unvermischte Asphalt einen Penetrationsgrad von 43 bis 72 mm, einen Erweichungspunkt von mehr als 47 °C, und eine Duktilität von über 50 cm aufweist.

12. Verfahren nach Anspruch 11, das weiter das Verfestigen der Straße umfasst.

13. Verfahren nach Anspruch 12, wobei das Verfestigen ein erstes Verfestigen bei über 165 °C ohne Verursachen von Vibrationen, ein zweites Verfestigen bei über 110 °C unter Verwendung einer Rüttelwalze und ein drittes Verfestigen bei über 60 °C unter Verwendung eines nicht vibrierenden Gummireifens umfasst.

## Revendications

1. Composition d'asphalte, produisant un bas niveau de bruit, comprenant un additif pour asphalte qui contient une poudre de caoutchouc pour pneus et une résine de pétrole, cette composition d'asphalte **caractérisée en ce qu'**elle comprend:
(a) 5-10 % en poids d'asphalte essentiellement pur, calculé selon le poids total de la composition;
(b) un additif pour asphalte contenant:
(b1) 2-7 % en poids de cette poudre de caoutchouc pour pneus, calculé selon le poids total de la composition, et
(b2) 3-8 % en poids de cette résine de pétrole, calculé selon le poids total de la composition; et
(c) le reste, constitué d'agrégat qui convient pour le bitume asphaltique routier;
l'asphalte essentiellement pur ayant un degré de pénétration de 43 à 72 mm, un point de ramollissement de plus de 47°C, et une ductilité supérieure à 50 cm.

2. Composition d'asphalte, produisant un bas niveau de bruit, selon la revendication 1, **caractérisée en ce que** les particules de l'agrégat ont une grosseur maximum de 13 mm et **en ce que**, après analyse granulométrique, 92 à 100 % des particules ont une grosseur de 13 mm, 62 à 81 % une grosseur de 9,5 mm, 10 à 31 % une grosseur de 4,75 mm, 10 à 21 % une grosseur de 2,36 mm, 4 à 17 % une grosseur de 0,6 mm, 3 à 12 % une grosseur de 0,3 mm, 3 à 8 % une grosseur de 0,15 mm, et 2 à 7 % une grosseur de 0,75 mm.

3. Composition d'asphalte, produisant un bas niveau de bruit, selon la revendication 1, **caractérisée en ce que** les particules de l'agrégat ont une grosseur maximum de 19 mm et **en ce que**, après analyse granulométrique, 95 à 100 % des particules ont une grosseur de 19 mm, 53 à 78 % une grosseur de 13 mm, 35 à 62 % une grosseur de 9,5 mm, 10 à 31 % une grosseur de 4,75 mm, 10 à 21 % une grosseur de 2,36 mm, 4 à 17 % une grosseur de 0,6 mm, 3 à 12 % une grosseur de 0,3 mm, 3 à 8 % une grosseur de 0,15 mm, et 2 à 7 % une grosseur de 0,75 mm.

4. Composition d'asphalte, produisant un bas niveau de bruit, selon la revendication 2 ou la revendication 3, **caractérisée en ce que** les particules dont le diamètre moyen est de 4,75 mm environ constituent 5 à 10 % en poids d'un laitier d'acier dur ayant un indice d'abrasion superficielle inférieur à 2,8 et un indice de dureté supérieur à 3.

5. Procédé de préparation d'une composition d'asphalte produisant un bas niveau de bruit, cette composition comprenant un additif pour asphalte qui contient une poudre de caoutchouc pour pneus et une résine de pétrole, ce procédé étant **caractérisé en ce qu'**il comprend l'étape qui consiste à:
mélanger, à une température comprise entre 175°C et 195°C:
(a) 5 à 10 % en poids d'asphalte essentiellement pur, calculé selon le poids total de la composition;
(b1) 2 à 7 % en poids de la poudre de caoutchouc pour pneus, calculé selon le poids total de la composition,
(b2) 3 à 8 % en poids de la résine de pétrole, calculé selon le poids total de la composition; et
(c) le reste, constitué d'agrégat qui convient pour le bitume asphaltique routier,
l'asphalte essentiellement pur ayant un degré de pénétration de 43 à 72 mm, un point de ramollissement de plus de 47°C, et une ductilité supérieure à 50 cm.

6. Procédé de préparation d'une composition d'asphalte produisant un bas niveau de bruit, selon la revendication 5, **caractérisé en ce que** le processus de mélange consiste à mélanger l'asphalte essentiellement pur, la poudre de caoutchouc pour pneus, et la résine de pétrole pour former de l'asphalte reformé, et à mélanger l'asphalte reformé avec l'agrégat.

7. Procédé de préparation de la composition d'asphalte produisant un bas niveau de bruit, selon la revendication 5, **caractérisé en ce que** la poudre de caoutchouc pour pneus est d'une granulométrie de 30 à 40 au tamis.

8. Procédé de préparation de la composition d'asphalte produisant un bas niveau de bruit, selon la revendication 5, **caractérisé en ce que** la résine de pétrole est une résine thermoplastique en poudre ayant un point de ramollissement de 95 à 160°C et une densité comprise entre 1,05 et 1,1.

9. Procédé de préparation de la composition d'asphalte produisant un bas niveau de bruit, selon la revendication 5, **caractérisé en ce que** les particules de l'agrégat ont une grosseur maximum de 13 mm et **en ce que**, après analyse granulométrique, 92 à 100 % des particules ont une grosseur de 13 mm, 62 à 81 % une grosseur de 9,5 mm, 10 à 31 % une grosseur de 4,75 mm, 10 à 21 % une grosseur de 2,36 mm, 4 à 17 % une grosseur de 0,6 mm, 3 à 12 % une grosseur de 0,3 mm, 3 à 8 % une grosseur de 0,15 mm, et 2 à 7 % une grosseur de 0,75 mm.

10. Procédé de préparation de la composition d'asphalte produisant un bas niveau de bruit, selon la revendication 5, **caractérisé en ce que** les particules de l'agrégat ont une grosseur maximum de 19 mm et **en ce que**, après analyse granulométrique, 95 à 100 % des particules ont une grosseur de 19 mm, 53 à 78 % une grosseur de 13 mm, 35 à 62 % une grosseur de 9,5 mm, 10 à 31 % une grosseur de 4,75 mm, 10 à 21 % une grosseur de 2,36 mm, 4 à 17 % une grosseur de 0,6 mm, 3 à 12 % une grosseur de 0,3 mm, 3 à 8 % une grosseur de 0,15 mm, et 2 à 7 % une grosseur de 0,75 mm.

11. Procédé d'asphaltage d'une route consistant:
à appliquer une composition d'asphalte produisant un bas niveau de bruit au-dessus d'un matériau imperméabilisant de la route tout en maintenant la température au-dessus de 150°C, ce procédé étant **caractérisé en ce que** la composition comprend:
(a) 5-10 % en poids d'asphalte essentiellement pur, calculé selon le poids total de la composition;
(b) un additif pour asphalte contenant:
(b1) 2-7 % en poids d'une poudre de caoutchouc pour pneus, calculé selon le poids total de la composition,
(b2) 3-8 % en poids d'une résine de pétrole, calculé selon le poids total de la composition; et
(c) le reste, constitué d'agrégat qui convient pour le bitume asphaltique routier;
l'asphalte essentiellement pur ayant un degré de pénétration de 43 à 72 mm, un point de ramollissement de plus de 47°C, et une ductilité supérieure à 50 cm.

12. Procédé selon la revendication 11, consistant par ailleurs à mettre en oeuvre le processus de durcissement de la route.

13. Procédé selon la revendication 12, **caractérisé en ce que** le processus de durcissement comprend un premier durcissement à une température supérieure à 165°C sans provoquer de vibrations, un deuxième durcissement à une température supérieure à 110°C effectué à l'aide d'un rouleau vibrant, et un troisième durcissement à une température supérieure à 60°C effectué à l'aide d'un pneu en caoutchouc non vibrant.
